(19) Europäisches Patentamt
European Patent Office
Office européen des brevets

(11) **EP 1 876 538 A2**

(12) **EUROPEAN PATENT APPLICATION**

(43) Date of publication:
**09.01.2008 Bulletin 2008/02**

(51) Int Cl.:
***G06F 17/24*** *(2006.01)*

(21) Application number: **07252677.5**

(22) Date of filing: **03.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **05.07.2006 JP 2006185941**
**26.04.2007 JP 2007116872**

(71) Applicant: **Seiko Epson Corporation**
**Shinjuku-ku**
**Tokyo 163-0811 (JP)**

(72) Inventors:
• **Nagahara, Atsushi,**
**c/o Seiko Epson Corporation**
**Suwa-shi,**
**Nagano 392-8502 (JP)**

• **Yamakado, Hitoshi,**
**c/o Seiko Epson Corporation**
**Suwa-shi,**
**Nagano 392-8502 (JP)**
• **Gu, Yu,**
**c/o Seiko Epson Corporation**
**Suwa-shi,**
**Nagano 392-8502 (JP)**

(74) Representative: **Cloughley, Peter Andrew et al**
**Miller Sturt Kenyon**
**9 John Street**
**London WC1N 2ES (GB)**

(54) **Document editing device, program, and storage medium**

(57)    A document editing device includes: object obtaining means that obtains an object including data indicative of a text; aspect ratio storage means that stores an aspect ratio within a predetermined range including a golden ratio; and object editing means that edits the object by changing location of the text so that a circumscribed rectangle of the text is a rectangle having two adjacent edges whose lengths form a ratio which complies with the aspect ratio stored in the aspect ratio storage means.

*FIG. 1*

EP 1 876 538 A2

**Description**

**BACKGROUND**

**Technical Field**
The present invention relates to a technique for automatically performing layout when editing a document.
**Related Art**
There are known techniques for editing a document including objects (digital content) such as images and text data (character strings). For example, JP-A-2002-297571 discloses a technique for locating a text in a definite text area. JP-A-8-180037, JP-A-10-28962, JP-A-10-301980, and JP-A-2000-200354 disclose techniques for generating a document having a layout intended to be perceived as esthetically pleasing, or well-balanced. Further, JP-A-4-347779 discloses a technique for determining a size of a speech balloon in a comic strip, depending on a size of a character string to be put in the balloon.
The former five publications (JP-A-2002-297571, JP-A-8-180037, JP-A-10-28962, JP-A-10-301980, and JP-A-2000-200354) give rise to a problem that esthetic value or balance of layout of a generated document will always vary depending on the volume of an object to be located, even when objects are simply located in a definite area. The latter publication JP-A-4-347779 does not disclose a method of editing objects. Thus, according to known techniques, documents, or particular objects cannot be automatically edited depending on the volume of an object.

**SUMMARY**

The present invention provides a technique by which, even after volume of an input object changes, a document or specifically the object included in a document is automatically edited depending on the volume of the object.
According to one aspect of the invention, there is provided a document editing device including: object obtaining means that obtains an object including data indicative of a text; aspect ratio storage means that stores an aspect ratio within a predetermined range including a golden ratio; and object editing means that edits the object by changing location of the text so that a circumscribed rectangle of the text is a rectangle having two adjacent edges whose lengths have a ratio which complies with the aspect ratio stored in the aspect ratio storage means.
By the document editing device, a text is edited so that a circumscribed rectangle of the text has an aspect ratio which falls within a predetermined range including the golden ratio.
Alternatively in the document editing device, the aspect ratio $r$ may be within a range of

$$\sqrt{2} \le r \le 2 \text{ or } \frac{1}{2} \le r \le \frac{1}{\sqrt{2}}.$$

By the document editing device, the text is edited so that the circumscribed rectangle of the text has an aspect ratio which falls within a certain range.
Also alternatively in the document editing device, the aspect ratio may fall within a range defined by an equation:

$$(0.9 \times \frac{1+\sqrt{5}}{2}) \le r \le (1.1 \times \frac{1+\sqrt{5}}{2}) \text{ or } (0.9 \times \frac{2}{1+\sqrt{5}}) \le r \le (1.1 \times \frac{2}{1+\sqrt{5}}).$$

By the document editing device, the aspect ratio falls within a predetermined range relative to the golden ratio as a reference.
Also alternatively in the document editing device, the aspect ratio may be expressed by:

$$r = \frac{1+\sqrt{5}}{2} \text{ or } r = \frac{2}{1+\sqrt{5}}.$$

By the document editing device, the aspect ratio is the golden ratio.
Also alternatively, the document editing device may further include object attribute obtaining means that obtains object attribute information related to the object obtained by the object obtaining means, from an attribute storage means storing object attribute information indicating a font size and a line pitch of each object. The rectangle may have a size which is determined based on the number of characters constituting the text and based on the object attribute information obtained by the object attribute obtaining means.
By the document editing device, the size of the rectangle is determined, based on the number of characters constituting the text and based on the object attribute information obtained by the attribute information obtaining means.
Also alternatively, the document editing device may further include object area obtaining means that obtains information indicative of an object area, which limits an area in which the object obtained by the object obtaining means is to be located within a layout area corresponding to an output means of a document edited by the document editing device. The rectangle may have a size which is determined so as to be contained in the object area obtained by the object area obtaining means.

By the document editing device, the size of the rectangle is determined so as to be contained in the object area.

Also alternatively, the document editing device may further include layout determination means that locates the rectangle within the object area.

By the document editing device, the rectangle is located to be contained in the object area.

Further alternatively, the document editing device may further includes: attribute obtaining means that obtains object attribute information related to the object obtained by the object obtaining means, from an attribute storage means which stores object attribute information indicating a font size and a line pitch of the text; largest rectangle determination means that determines a largest rectangle within the object area, the largest rectangle having a major or minor edge whose length is equal to any of edges of the object area; and determination means that determines whether or not the text indicated by the object and located in accordance with the object attribute information obtained by the attribute obtaining means is contained in the largest rectangle determined by the largest rectangle determination means, or whether or not a blank space in the largest rectangle is equal to or smaller than a threshold. If the determination means determines that the object is not contained in the largest rectangle or that the blank space in the largest rectangle is equal to or greater than the threshold, the object editing means may change the object attribute information.

By the document editing device, the object is edited so as to fit in the largest rectangle.

Further alternatively in the document editing device, the aspect ratio storage means may store a plurality of aspect ratios, the object includes attribute information indicative of an attribute of the object itself. The document editing device may further include aspect ratio selection means that selects one aspect ratio from the plurality of aspect ratios stored in the aspect ratio storage means, based on the attribute included in the object. The object editing means may edit the object by editing location of the text so that a circumscribed rectangle of the text has two adjacent edges whose lengths form a ratio equal to the aspect ratio selected by the aspect ratio selection means.

By the document editing device, an aspect ratio to be used is selected from plural aspect ratios, depending on an attribute.

Also alternatively, in the document editing device, the aspect ratio storage means may store a plurality of aspect ratios, a target document to be edited includes layout information indicative of location of the object included in the document. The document editing device may further include aspect ratio selection means that selects one aspect ratio from the plurality of aspect ratios stored in the aspect ratio storage means, based on the layout information included in the document. The object editing means may edit the object by editing location of the text so that a circumscribed rectangle of the text has two adjacent edges whose lengths form a ratio equal to the aspect ratio selected by the aspect ratio selection means.

By the document editing device, an aspect ratio is used selected from plural aspect ratios, depending on the layout.

Also alternatively, in the document editing device, the aspect ratio storage means may store a plurality of aspect ratios. A target document to be edited may include background information indicative of a background. The document editing device may further include an aspect ratio selection means that selects one aspect ratio from the plurality of aspect ratios stored in the aspect ratio storage means, based on the background information included in the document. The object editing means may edit the object by editing location of the text so that a circumscribed rectangle of the text has two adjacent edges whose lengths have a ratio equal to the aspect ratio selected by the aspect ratio selection means.

By the document editing device, an aspect ratio to be used is selected from plural aspect ratios, depending on the background.

According to another aspect of the invention, there is provided a program causing a computer device having aspect ratio storage means for storing an aspect ratio within a predetermined range including a golden ratio to execute a process, the process comprising: obtaining an object including data indicative of a text; and editing an object by changing at least a location of the text so that a circumscribed rectangle of the text is a rectangle having two adjacent edges whose lengths form a ratio which complies with the aspect ratio stored in the aspect ratio storage means.

According to still another aspect of the invention, there is provided a computer readable storage medium storing the program.

By the program, location of a text is changed so that a circumscribed rectangle of the text has a certain aspect ratio.

## BRIEF DESCRIPTION OF THE DRAWINGS

The invention will now be described with reference to the accompanying drawings, wherein like numbers reference like elements:

FIG. 1 is a block diagram showing a functional structure of a document editing device according to a first embodiment;

FIG. 2 is a block diagram showing a hardware structure of the document editing device 100;

FIG. 3 is a flowchart showing operation of the document editing device 100;

FIG. 4 exemplarily shows object attribute information obtained in the first embodiment;

FIG. 5 is a flowchart showing details of processing for forming a golden rectangle, according to the first embodiment;

FIG. 6 exemplarily shows an object laid out temporarily;

FIG. 7 shows an example of a formed golden rectangle;

FIG. 8 shows another example of a golden rectangle;

FIG. 9 shows an example of a generated document;

FIG. 10 shows a block diagram showing a functional structure of a document editing device according to a second embodiment;

FIG. 11 is a flowchart showing operation of the document editing device 200;

FIG. 12 exemplarily shows object attribute information obtained in the second embodiment;

FIG. 13 exemplarily shows an object area L;

FIG. 14 is a flowchart showing processing for forming a golden rectangle, according to the second embodiment;

FIG. 15 exemplarily shows an object laid out temporarily;

FIG. 16 exemplarily shows an object after the font size is changed; and

FIG. 17 exemplarily shows an object after the line pitch is changed.

## DESCRIPTION OF EXEMPLARY EMBODIMENTS

1. First Embodiment

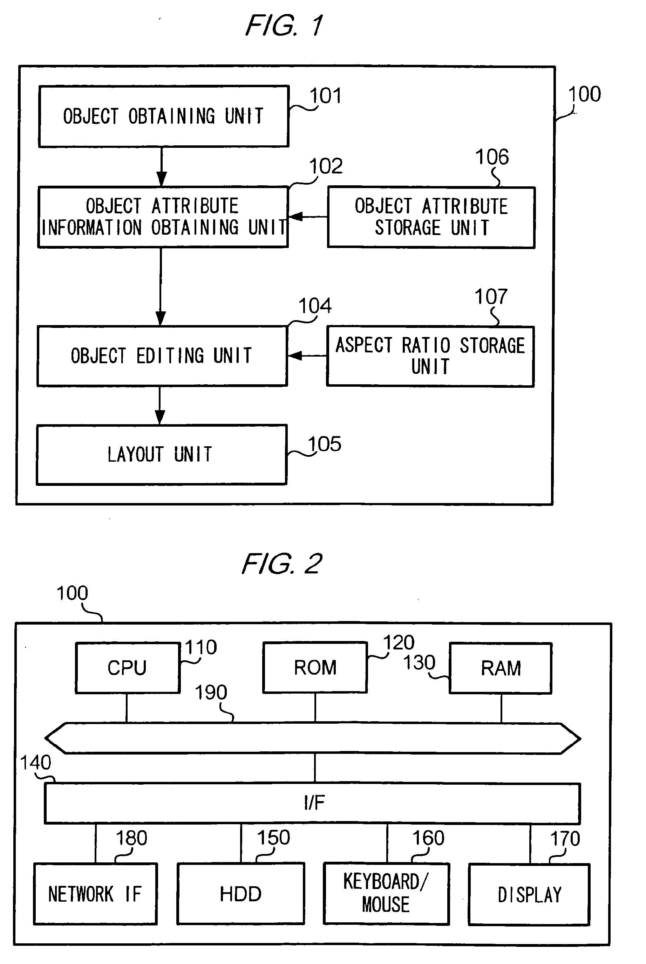

FIG. 1 is a block diagram showing a functional structure of a document editing device 100 according to a first embodiment of the invention. The document editing device 100 automatically edits a document, depending on objects located in a target document to be edited (hereinafter referred to as a "target document"). The term "document" refers to data which includes at least one object located in a layout area and layout information indicative of location of the at least one object in the layout area, or refers to an output result which is output in accordance with the data. The term "object" refers to data indicating at least one of a text (character string) and an image, or directly refers to the text or image indicated by the data. The term "layout area" refers to an area where the at least one object should be located, i.e., an area equivalent to an output unit of a document, such as a physical boundary of a document to be output. For example, the layout area can be one or plural paper sheets on which a document is printed, a page, sequential plural pages, a part of a page, or a type page.

An object obtaining unit 101 obtains an object as a target to be processed. An object attribute storage unit 106 stores object attribute information indicative of an attribute of at least one object. An object attribute obtaining unit 102 obtains object attribute information related to the object as a target to be processed. An aspect ratio storage unit 107 stores at least one aspect ratio, e.g., a golden ratio in this embodiment. An object editing unit 104 edits the object by changing at least a location of text in a manner that a circumscribed quadrangle of the object has two adjacent edges whose lengths form an aspect ratio which complies with the aspect ratio stored in the aspect ratio storage unit 107. Such a rectangle is a "golden rectangle" in this embodiment. The "golden rectangle" is a rectangle having two adjacent edges whose lengths constitute a ratio expressed by the equation (1) below (a so-called golden ratio). Left and right sides of the equation (1) may be replaced by each other.

$$1 : \frac{1 + \sqrt{5}}{2} \qquad \cdots (1)$$

FIG. 2 is a block diagram showing a hardware structure of the document editing device 100. A CPU (Central Processing Unit) 110 is a control device which controls respective components of the document editing device 100. A ROM 120 is a storage device which stores data and programs necessary for startup of the document editing device 100. A RAM 130 is a storage device which functions as a work area when the CPU 110 executes programs. An I/F (Interface) 140 is an interface through which data and control signals are input/output from/to various input/output devices and storage devices. A HDD (Hard Disk Drive) 150 is a storage device which stores various programs and data. As far as this embodiment is concerned, the HDD 150 stores a document editing program for editing documents. A keyboard/ mouse 160 is an input device via which a user inputs instructions to the document editing device 100. A display 170 is an output device which displays content of data or states of processing. A network IF 180 is an interface which transmits/ receives data to/from other devices connected through a network (not shown in the figures). The document editing device 100 is capable of receiving a document (more exactly, electronic data indicative of a document), for example, through the network and the network IF 180. The CPU 110, ROM 120, RAM 130, and I/F 140 are connected via a bus 190. As the CPU 110 executes a document editing program, the document editing device 100 is implemented with the functional structure as shown in FIG. 1.

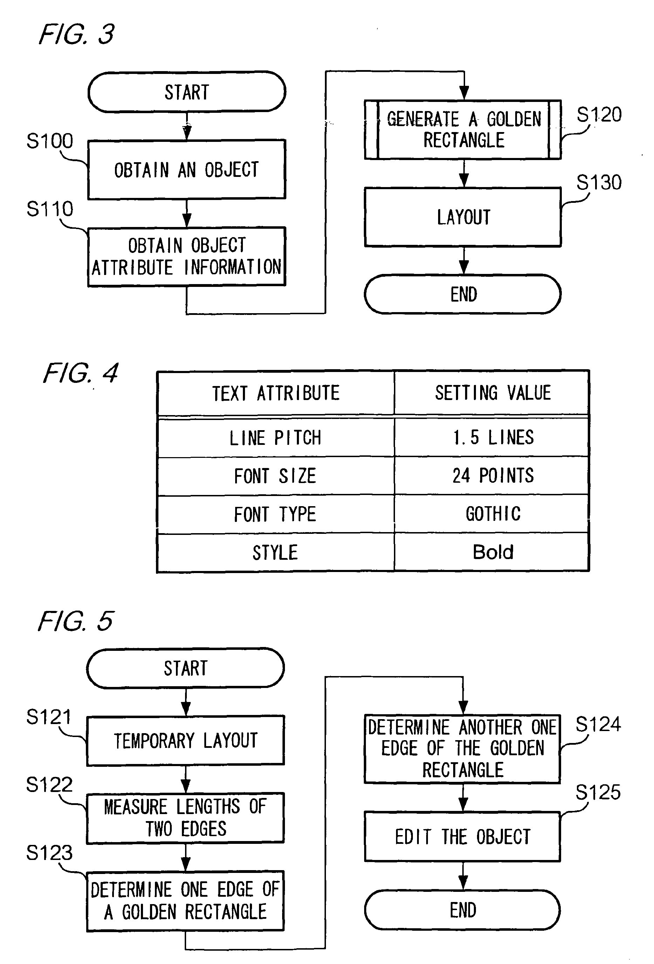

FIG. 3 is a flowchart showing operation of the document editing device 100. In a step S100, the CPU 110 obtains an object as a processing target. In this embodiment, the CPU 110 obtains the object maintained in the condition as the object has been included in a target document. The target document is stored in the HDD 150. The CPU 110 reads the target document from the HDD 150. In this embodiment, the object obtained as the processing target is text data including a character string: "A next generation printer XXX will be on sale on YY/ZZ (month/date). This printer enables high-speed printing and supports 2-way sheet feed and double-side printing as standard equipment, and simultaneously achieves space and energy saving, that is, an epoch-making product".

In a step S110, the CPU 110 obtains object attribute information. In this embodiment, each object includes object attribute information indicative of an attribute of the object itself. The CPU 110 extracts object attribute information from the obtained object. Alternatively, the CPU 110 may obtain object attribute information from the HDD 150. In this case, the HDD 150 stores object attribute information for each of plural objects. Each object includes an identifier which specifies related object attribute information. The CPU 110 obtains related object attribute information on the basis of the identifier included in the object as a processing target.

FIG. 4 exemplarily shows object attribute information obtained in this embodiment. The object attribute information includes plural data sets. Each of the data sets includes attribute identifiers indicative of types of attributes, and attribute values (setting values). The object attribute information includes "line pitch", "font size", "font type", and "style" as attribute identifiers, as well as "1.5 lines", "24 points", "Gothic", and "Bold" as values for the attributes, respectively. The attribute "line pitch" refers to an interval between text lines. The attribute "font size" refers to a size of a font. The attribute "font type" refers to a type of a font. The attribute "style" refers to a style of an object when the object is displayed, e.g., regular, italic, or bold.

Referring again to FIG. 3, the CPU 110 generates a golden rectangle in a step S120. In this step, location information of an object as a processing target is generated so that a circumscribed figure which externally touches the object becomes a golden rectangle when the object is located.

FIG. 5 is a flowchart showing details of processing for forming a golden rectangle, according the first embodiment. In a step S121, the CPU 110 temporarily lays out an object as a processing target. An area where the object as a processing target is laid out is determined in advance. In other words, a layout area is predetermined. Alternatively, a layout area may be determined in accordance with an instruction input from a user. Also alternatively, the CPU 110 may determine a layout area in accordance with a predetermined algorithm.

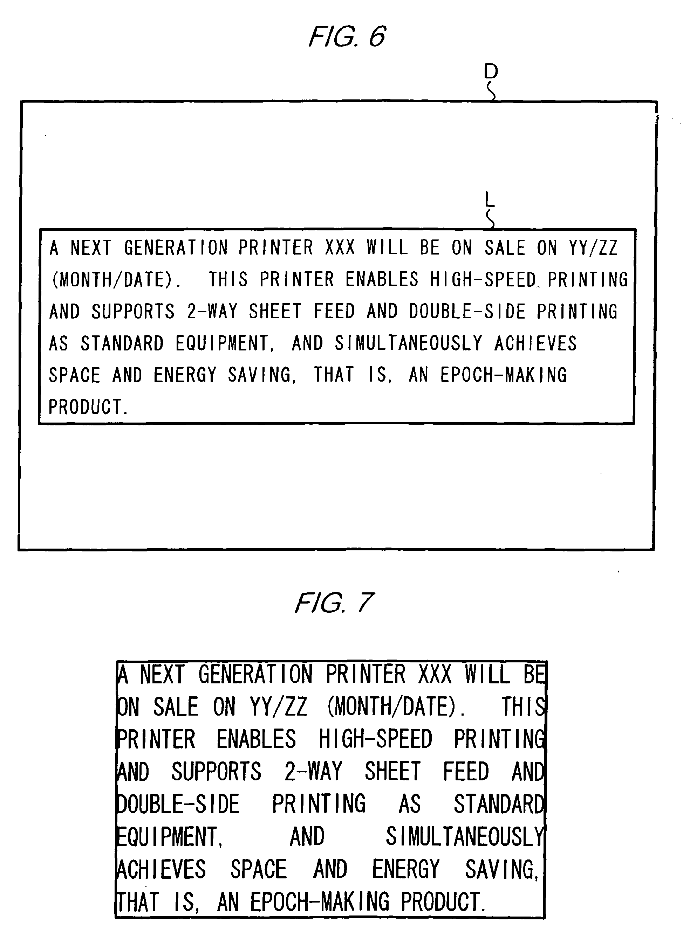

FIG. 6 exemplarily shows an object which has been temporarily laid out. A layout area D has, for example, an A4 size. An object area L is a partial area of the layout area D and indicates an area where an object as a processing target is located. That is, the object area limits an area where an object should be located in the layout area. In this embodiment, the object area L is determined on the basis of volume of the object as a processing target (e.g., the number of text characters in this example) and object attribute information. For example, the object area L is determined by locating a text in accordance with object attribute information, relative to a point (e.g., a center point) of the layout area regarded as a reference. More specifically, a character string of an object is located in accordance with the line pitch, font size, font type, and style which are specified by object attribute information. At this time, influence from the line pitch is reflected on a temporary layout. Therefore, the object area L is determined so that the character string is displayed over plural lines. For example, a rule is predetermined so as to arrange a character string in four lines in a temporary layout. The CPU 110 locates the character string and determines the object area L, in accordance with this rule. The temporary layout is virtually created in the RAM 130. That is, a result of the temporary layout is not displayed on the display 170. Of course, the result of the temporary layout may be displayed on the display 170.

Referring again to FIG. 5, the CPU 110 measures lengths of two edges of the object area L which are width $w$ and height $h$, in a step S 122. More specifically, the CPU 110 obtains first a circumscribed rectangle of an object (text). The CPU 110 measures the width and height of the obtained circumscribed rectangle. At this time, the CPU 110 may provide a predetermine blank space around the object. The CPU 110 may obtain the circumscribed rectangle including the blank space. Alternatively, the CPU 110 may set a text box capable of containing a text which is laid out temporarily, and may then obtain the width and height of the text box.

In a step S123, the CPU 110 calculates a length A of an edge of a golden rectangle in accordance with the equation (2) below.

$$A = \sqrt{\frac{2 \times w \times h}{1 + \sqrt{5}}} \qquad \cdots (2)$$

The equation (2) is obtained on the basis of the equation (3) below. The equation (3) is derived form a condition that the area of the object area L is equal to the area of the golden rectangle.

$$A \times \frac{1 + \sqrt{5}}{2} A = w \times h \qquad \cdots (3)$$

In a step S124, the CPU 110 calculates a length $A'$ of another edge of the golden rectangle in accordance with the equation 4 below.

$$A' = \frac{1 + \sqrt{5}}{2} A \qquad \cdots (4)$$

In a step S125, the CPU 110 edits the object so as to be located within the golden rectangle. This edit is carried out as follows. The CPU 110 locates characters included in the object as a processing target in order from the first character. When the total width of located characters reaches $A'$, the CPU 110 then enters a return key code, i.e., feeds a line. In a similar manner, characters are located in the second line. When the total width of characters located in the second line reaches A ', the CPU 110 then enters a return key code again. Thus, an object is obtained with characters located in a golden rectangle.

Otherwise, the CPU 110 may determine an area having height A and width A ' as a text area or text box. Into the text area, the CPU 110 pours the character string included in the object. That is, an object located in the golden rectangle can be obtained by locating characters so as to be contained in the text area.

FIG. 7 shows an example of a golden rectangle formed. Thus, an object is located so as to be contained in a golden rectangle.

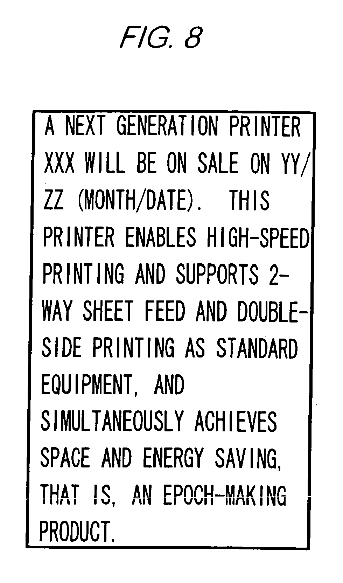

FIG. 8 shows another example of a golden rectangle formed. Although FIG. 7 exemplarily shows a wide golden rectangle, there can be a tall golden rectangle. Which of vertical and horizontal edges should be defined as a major edge is determined in advance. Otherwise, which of vertical and horizontal edges should constitute a major edge may be determined in accordance with an instruction input by a user. Also alternatively, which of vertical and horizontal edges should constitute a major edge may be determined by the CPU 110 in accordance with a predetermined algorithm. The predetermined algorithm is, for example, an algorithm which determines either a vertical or horizontal edge to be a major edge, depending on a shape of a layout area or an object area.

Referring again to FIG. 3, in a step S 130, the CPU 110 locates the object shaped in a golden rectangle, into the layout area D. The position where the object is to be located has been determined in advance. Otherwise, the position where the object is to be located may be determined in accordance with an instruction input by a user. As a complete location of the object as a processing target is determined, a document may be edited or otherwise generated..

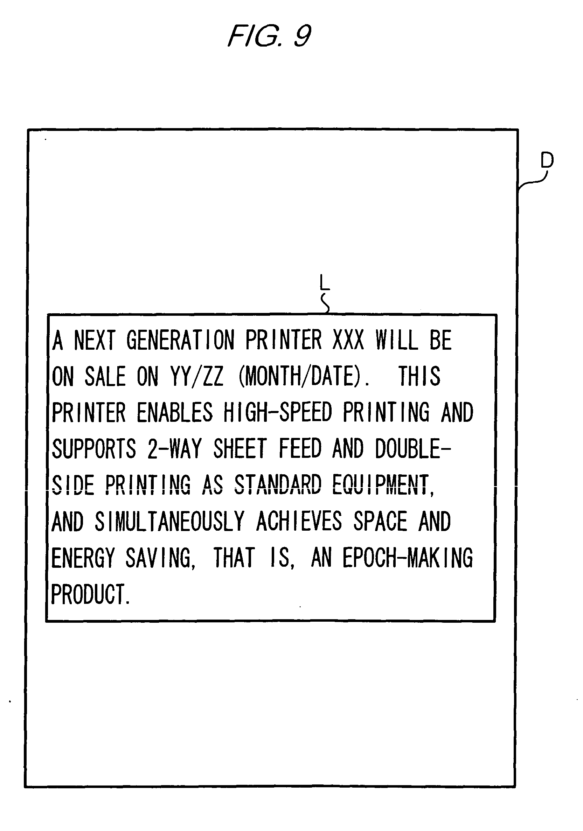

FIG. 9 exemplarily shows a generated document. As shown in the figure, a document is automatically generated depending on an object. Particularly in the first embodiment, a golden ratio is used as a predetermined aspect ratio which causes the layout of the object to be esthetically attractive to people.

2. Second Embodiment

Subsequently, a second embodiment of the invention will be described. In the description below, explanation of features that are common to the first embodiment will be omitted. Components common to the first embodiment will be denoted by like reference numbers. According to the first embodiment, the size of a golden rectangle is changed based on a volume of an object and related object attribute information. In the second embodiment, a size of a golden rectangle is determined first, and then an object is again edited to fit in the golden rectangle.

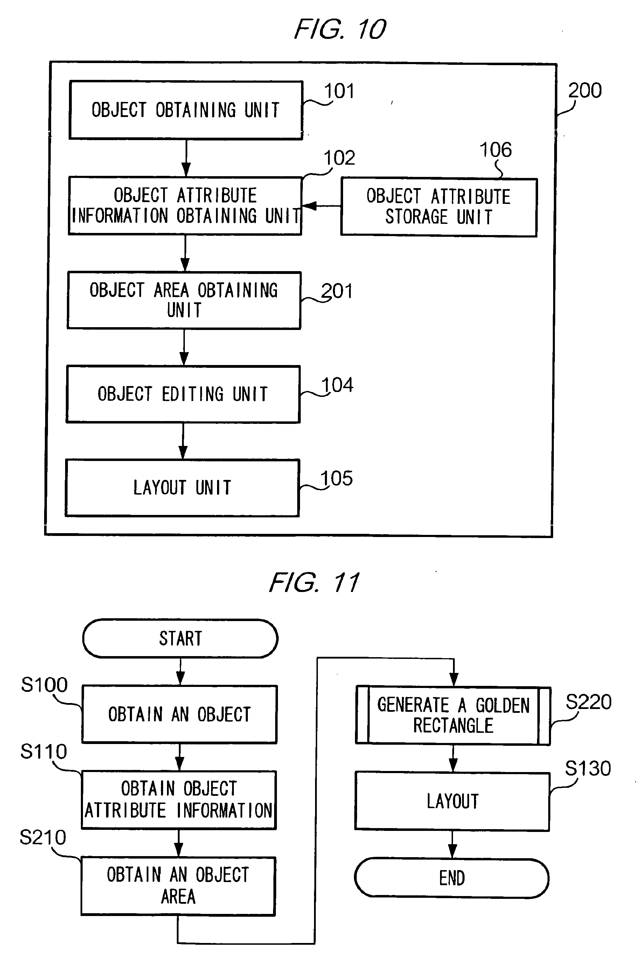

FIG. 10 is a block diagram showing a functional structure of a document editing device 200 according to the second embodiment. An object area obtaining unit 201 obtains information indicative of an object area L. The components other than the unit 201 are common to the document editing device 100 in the first embodiment, and therefore, description of these common components will be omitted. Since the second embodiment adopts a hardware structure that is also common to the first embodiment, description of the hardware structure will also be omitted.

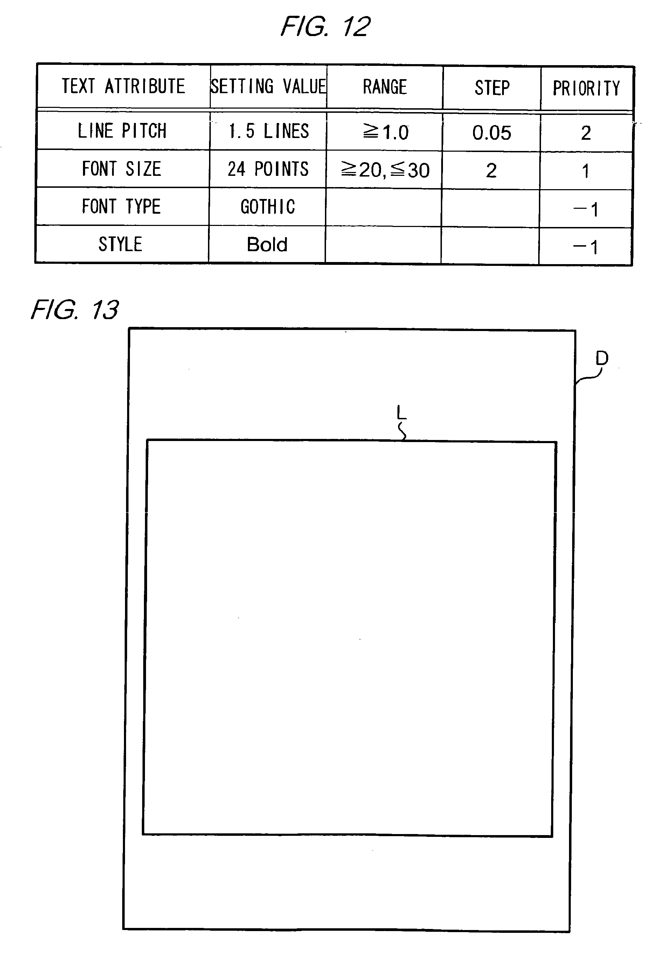

FIG. 11 is a flowchart showing operation of the document editing device 200 according to the second embodiment. The flow shown in FIG. 11 differs from the flow shown in FIG. 3 in that processing (step S210) for obtaining an object area is additionally included behind the step S110. Further, processing (step S220) for forming a golden rectangle includes different details from those described in the first embodiment.

FIG. 12 exemplarily shows content attribute information in the second embodiment. In this embodiment, content attribute information includes ranges in which setting values can vary, and change amounts (steps) and priorities concerning the setting values, in addition to attribute identifiers and setting values related to the identifiers as have been described in the first embodiment. The priorities each are used to specify a target attribute to be changed among plural attributes of an object when an object is edited. Of values of the priorities, "1" is the highest and "2" is the second highest. The priority "-1" indicates that a setting value of an attribute related to the priority is a fixed value. According to the priority shown in FIG. 12, the font size is changed first and the line pitch is changed next while the font type and style are not changed.

In the step S210, the CPU 110 obtains information indicative of an object area L. The information indicative of an object area L is stored in advance in the HDD 150. Alternatively, the CPU 110 may obtain information indicative of an object area L in accordance with an instruction input from a user. Also alternatively, information indicative of an object area L may be stored in advance in a different device from the document editing device 200.

FIG. 13 exemplarily shows an object area L. The object area L occupies a part of a layout area D. For example, the layout area D has an A4 size according JIS ( Japanese Industrial Standards). The object area L is a square area of 15 cm x 15 cm centered in the layout area D.

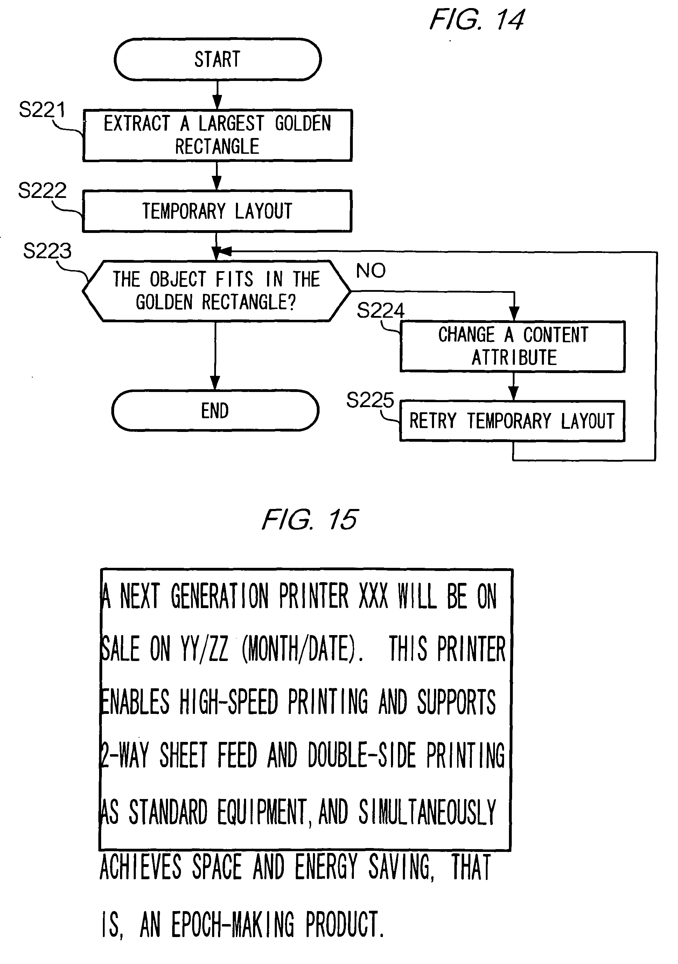

FIG. 14 is a flowchart showing details of processing for forming a golden rectangle, according to the second embodiment. In the step S221, the CPU 110 extracts a largest golden rectangle. The "largest golden rectangle" refers to a golden rectangle whose major or minor edge has a length equal to any of edges of the object area L, among golden rectangles which can be contained in the object area L. For example, in a case of generating a wide golden rectangle, the CPU 110 determines the length $A'$ of the major edge of a golden rectangle to be equal to the length of a horizontal edge of the object area L. That is, $A' = 15$ cm is given. Next, the CPU 110 calculates the length $A$ of the minor edge of the golden rectangle in accordance with the equation 4. In this manner, a largest golden rectangle is obtained with the lengths of major and minor edges being $A'$ and $A$.

In a step S222, the CPU 110 temporarily lays out characters included in the object, within the largest golden rectangle. To temporarily lay out an object is to locate the object within a largest golden rectangle with maintaining attributes of the object. In this example, the object has a font size of 24 points and a line pitch of 1.5 lines.

FIG. 15 exemplarily shows an object laid out temporarily. As shown in Fig. 15, temporary layout results in that characters "achieves space and energy saving, that is, an epoch-making product." are outside of the largest golden rectangle.

Referring again to FIG. 14, the CPU 110 determines whether or not the object fits in the largest golden rectangle, in a step S223. The wording "fit in" is used to mean that the difference between a circumscribed rectangle of the object and the largest golden rectangle falls within a tolerable range. If the circumscribed rectangle is larger than the largest golden rectangle, the difference causes an "overflow". Otherwise, if the circumscribed rectangle is smaller than the largest golden rectangle, the difference gives rise to a "blank space". More specifically, the CPU 110 determines whether or not the characters included in the object can be contained in the largest golden rectangle. Alternatively, the CPU 110 may determine whether or not the blank space in the largest golden rectangle is any smaller than a threshold. The term "blank space" in this case refers to the other areas within the largest golden rectangle than the area occupied by the object (which is a text in this embodiment).

If the object is not determined to fit in the golden rectangle (S223: NO), the CPU 110 changes content attribute information, in a step S224. This processing is carried out as follows. The CPU 110 determines an attribute as a target to be changed, on the basis of priorities included in the content attribute information (FIG. 12). In this case, the attribute "font size" related to the highest priority is selected first as a target. The CPU 110 decrements the setting value of the selected attribute by one step. The content attribute information includes information indicating that the step of the attribute "font size" is "2". Therefore, the CPU 110 changes the setting value of the attribute "font size" to 22 points by reducing two points from 24 points. The CPU 110 updates the content attribute information with the changed setting value. The CPU 110 further stores into the RAM 130 a flag indicating that the attribute "font size" has been changed. In a step S225, the CPU 110 temporarily lays out the object again based on the updated content attribute information.

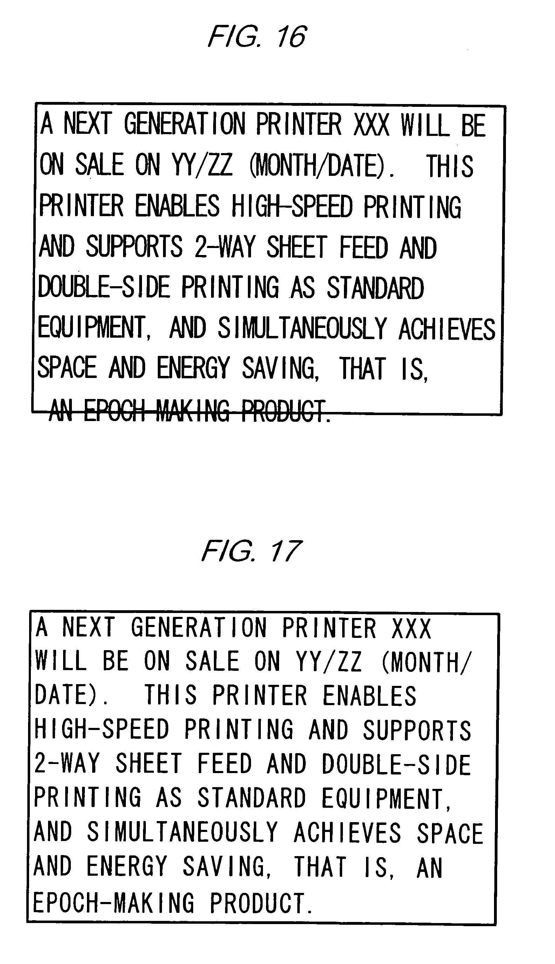

FIG. 16 exemplarily shows an object whose font size has been changed. Though the font size has been changed, a part of the text "an epoch-making product." is still outside of the largest golden rectangle.

Referring again to FIG. 14, the CPU 110 determines next whether or not the object fits in the largest golden rectangle, in the step S223. As shown in FIG. 16, the object does not fit in the largest golden rectangle (step S223). In the step S224, the CPU 110 changes content attribute information. With respect to the attribute "font size" which is given the highest priority, there has already been stored a flag indicating that the setting value has been changed. Therefore, the CPU 110 determines the attribute "line pitch" having the second highest priority to be a next target to be changed. The CPU 110 decrements the setting value of the selected attribute by one step. The content attribute information includes information indicating that the step of the attribute "line pitch" is "0.05". Accordingly, the CPU 110 changes the setting value of the attribute "line pitch" to 1.45 lines by reducing 0.05 lines from 1.5 lines. The CPU 110 updates the content attribute information with the changed setting value. The CPU 110 further stores into the RAM 130 a flag indicating that the attribute "line pitch" has been changed. In the step S225, the CPU 110 temporarily lays out the object again based on the updated content attribute information.

FIG. 17 exemplarily shows an object whose line pitch has been changed. The object (character string) is properly contained in the largest golden rectangle. That is, the object fits in the largest golden rectangle. In the step S223, the CPU 110 determines the object to fit in the golden rectangle (step S223: YES) and terminates the processing shown in FIG. 14.

Referring again to FIG. 11, the CPU 110 lays out the object in the step S 130 after forming a golden rectangle. This processing is carried out using the same procedure as described in the first embodiment.

According to the second embodiment as has been described above, if an object does not fit in a golden rectangle, the object is edited by changing attributes of the object so that the object is modified to fit in the golden rectangle. The first and second embodiments may be used in combination with each other. In the processing shown in FIG. 14, particularly when looping the steps S223 to S225, there may be a case in which calculation processing does not converge. In such a case, processing may be interrupted when the steps are looped a certain number of times or more.

3. Modifications

The invention is not limited to the exemplary embodiments as described above but may be variously modified in practice. From the description below, explanation to common features to the above embodiments will be omitted. Common components to the above embodiments will be denoted at common reference numerals in the description below. Two or more of modifications described below or at least one of the modifications below and at least one of the first and second embodiments can be combined with each other for use.

3-1. Modification 1

A figure which is located so as to contain an object is not limited to a golden rectangle. The figure may be any quadrangle as far as the rectangle has a predetermined aspect ratio. For example, the aspect ratio $r$ may fall within a range of $\sqrt{2} \leq r \leq 2$ or $\frac{1}{2} \leq r \leq \frac{1}{\sqrt{2}}$. √2 : 1 is a so-called "silver ratio". The foregoing ranges are considered to be desirable, for example, based on disclosure of "Mathematics seminar", vol. 42, no. 7, p. 32, published in July 2004, NIPPON HYORONSHA CO., LTD. Alternatively, the aspect ratio r may be defined within a predetermined range relative to the golden ratio as a reference, e.g., a range of ±10 % of the golden ratio. The range of ±10 % is widely used as a tolerable range for errors. More specifically, the aspect ratio r may fall within a range expressed by the equations (5) or (6) below. If a different ratio from the golden ratio is used as an aspect ratio, the equations (2) to (4) do not use the golden ratio but use the different ratio.

$$(0.9 \times \frac{1+\sqrt{5}}{2}) \leq r \leq (1.1 \times \frac{1+\sqrt{5}}{2}) \qquad \cdots(5)$$

$$(0.9 \times \frac{2}{1+\sqrt{5}}) \leq r \leq (1.1 \times \frac{2}{1+\sqrt{5}}) \qquad \cdots(6)$$

3-2. Modification 2

The HDD 150 may store plural aspect ratios. In this case, the CPU 110 selects one aspect ratio to be used for processing, among the plural aspect ratios. Selection of the one aspect ratio is carried out, for example, based on an attribute of the target object. The attribute refers to a characteristic of an object, examples of which are cited below. The attribute may be: an object type (text, image, or the like); an object category ("title", "subtitle", "body", "main image", "sub image", or the like); a font size; a font type ("mincho", "gothic", or the like); a font style ("regular", "bold", "italic", or the like); an object size (area, the number of characters, the number of pixels, or the like); an object priority ("high", "medium", "low", an index, or the like); content of an image ("human", "landscape", "mountain", "flower", or the like); an object shape ("triangle", "rectangle", "pentagon", "star", "ellipse", or the like) ; an object color (average color, representative color, or the like); or a relationship between an object and a grid line (e.g., whether an object is located above or below a grid line, or the like). Described below are specific examples in which aspect ratios are selected depending on attributes of an object.

An example of selecting an aspect ratio depending on a color of a target object will now be described. In this example, the HDD 150 stores two aspect ratios of $r_1 = \sqrt{2}$ and $r_2 = 1.618$. The HDD 150 also stores a table which holds correspondence between object attributes and aspect ratios. This table describes that: if the color of an object is a warm color such as red, orange, or yellow, the aspect ratio $r_2$ is used; and if the color of an object is a cold color such as green, blue, or purple, the aspect ratio $r_1$ is used. The CPU 110 selects an aspect ratio in accordance with this table.

If the color of the object O is a warm color, the object is more visually attractive, i.e., the object is conspicuous. Therefore, the golden ratio is adopted as an aspect ratio. Inversely, a cold color is less visually attractive. Accordingly, a ratio other than the golden ratio is adopted for a cold color.

3-3. Modification 3

In case where the HDD 150 stores plural aspect ratios, an aspect ratio may be selected based on layout. In this case, the HDD 150 stores a table which holds correspondence between layouts and aspect ratios. This case will now be described with reference to specific examples below. In the examples below, the HDD 150 stores two aspect ratios $r_1 = \sqrt{2}$ and $r_2 = 1.618$.

(1) Example of selecting an aspect ratio depending on the number of objects

In this example, the HDD 150 stores a table which holds correspondence between numbers of objects included in a document and aspect ratios. This table describes that: if the number of objects is equal to or greater than a threshold (e.g., five), the aspect ratio $r_1$ is used; and if the number of objects is smaller than the threshold, the aspect ratio $r_2$ is used. The CPU 110 selects an aspect ratio in accordance with this table.

(2) Example of selecting an aspect ratio depending on layout of objects

In this example, a document includes layout information indicative of coarse locations of objects. The layout information includes information indicative of coarse locations of objects within a layout area, e.g., "an object $T_1$ is located within an area of 1/3 from the top of the layout area, and an object $I_1$ is located in the lower half of the layout area". The HDD 150 further stores a table which holds correspondence between layouts of objects and aspect ratios. This table describes that: if an object is located in the upper half of the layout area, the aspect ratio $r_1$ is used; and if an object is located in the lower half of the layout area, the aspect ratio $r_2$ is used. The CPU 110 selects an aspect ratio in accordance with this table.

3-4. Modification 4

In case where the HDD 150 stores plural aspect ratios, an aspect ratio may be selected based on a background. In this case, the target document includes background information. The background information indicates a background of the document. The HDD 150 stores a table which holds correspondence between backgrounds and aspect ratios. This case will now be described with reference to specific examples below. In the examples below, the HDD 150 stores two aspect ratios $r_1 = \sqrt{2}$ and $r_2 = 1.618$ .

(1) Example of selecting an aspect ratio depending on a frequency component of the background

In this example, the CPU 110 obtains a frequency characteristic of a background image. The CPU 110 further obtains a characteristic frequency of the background, from the obtained frequency characteristic. The characteristic frequency is a frequency indicative of a distinguishing characteristic of a frequency characteristic, i.e., a boundary value of frequency at which intensity becomes equal to or greater than a threshold. The HDD 150 stores a table which holds correspondence between characteristic frequencies and aspect ratios. This table describes that: if the characteristic frequency is within a high-frequency range lower than a threshold, the aspect ratio $r_2$ is used; and if the characteristic frequency is within a high-frequency range higher than the threshold, the aspect ratio $r_1$ is used. The CPU 110 selects an aspect ratio in accordance with this table.

If the characteristic frequency is within a low-frequency range, e.g., if low-frequency components are dominant in the background, the background is a plain image or a roughly patterned image (if the image is patterned). In this case, locations of objects may be visually sensitively recognized, and therefore, the golden ratio is used as an aspect ratio. Inversely, if the characteristic frequency is within a high-frequency range, e.g., if high-frequency components are dominant in the background, the background is a complicatedly patterned image. In this case, locations of objects cannot visually sensitively be recognized, and therefore, a different ratio from the golden ratio is used as an aspect ratio.

(2) Example of selecting an aspect ratio depending on a color contrast between the background and an object

In this example, the CPU 110 calculates a contrast between the color of a target object and a background color. The HDD 150 stores a table which holds correspondence between contrasts and aspect ratios. This table describes that: if the contrast is lower than a threshold, the aspect ratio $r_1$ is used; and if the contrast is higher than the threshold, the aspect ratio $r_2$ is used. The CPU 110 selects an aspect ratio in accordance with this table.

If the contrast is high, locations of objects can be visually sensitively recognized, and therefore, the golden ratio is used as an aspect ratio. Inversely, if the contrast is low, locations of objects cannot visually sensitively be recognized, and therefore, a different aspect ratio from the golden ratio is used.

In Modifications 2 to 4, $r_1=\sqrt{2}$ and $r_2=1.618$ are used as examples of plural aspect ratios. However, aspect ratios are not limited to these values. Any other aspect ratios can be used as far as the aspect ratios are such ratios as described in Modification 1. The relationships between aspect ratios and attributes as described in Modifications 2 to 4 are mere examples. Relationships between aspect ratios and attributes are not limited to those described in Modifications 2 to 4. For example, in Modification 4, a different aspect ratio from the golden ratio can be used when contrast is high. On the other side, the golden ratio may be used when contrast is low.

3-5. Modification 5

A circumscribed polygon of an object need not always visually touch externally the object. Since each object has its own area as data, whatever polygon is available as a circumscribed polygon as far as the polygon circumscribes the area. For example, if a blank space as data is given in the periphery of an image also as data, a circumscribed polygon externally touches an area including the blank space.

3-6. Modification 6

Since the golden rectangle is a virtual guide figure for editing an object, the golden rectangle need not always be displayed visible to users. However, the CPU 110 may allow the display 170 to show a figure corresponding to a golden rectangle. For example, the CPU 110 may control the display 170 to show a rectangle as a figure corresponding to a golden rectangle, with the rectangle overlapped on the golden rectangle. However, the figure displayable to be overlapped on a golden rectangle is not limited to a figure drawn with a solid line but may be presented as a line segment, broken line, dots, or any other figure. Such figures may be located at a predetermined interval, overlapping a golden rectangle.

3-7. Modification 7

The method for obtaining an object in the step S100 is not limited to the method described in the above embodiments. An object may be obtained included in a target document, i.e., together with a target document. Further, objects need not always each include attribute information. Attribute information may be obtained and processed as separate data from the objects.

3-8. Modification 8

The number of objects is not limited to numbers described in the above embodiments. The above embodiments have been described with reference to examples in which one object is given as a target whose location should be determined. However, plural objects may be targets whose locations should be determined. In this case, the CPU 110 specifies objects as targets to be actually processed, one after another from among the plural objects. The CPU 110 subjects the objects specified as the targets to be processed to the processing described in the above embodiments.

3-9. Modification 9

The functional structure of the document editing device is not limited to the structure shown in FIG. 1. Functions shown in FIG. 1 may be partially omitted. The hardware structure of the document editing device is not limited to the structure shown in FIG. 2. Functions shown in FIG. 2 may be partially omitted. In particular, the keyboard/mouse 160, display 170, and network IF 180 may be omitted. These functions may be provided by devices other than the document editing device. Alternatively, a system including plural devices may have the functional structure shown in FIG. 1 and the hardware structure shown in FIG. 2.

3-10. Modification 10

The above embodiments have been described with reference to examples which deal with an object as data indicative of a text. However, the object may be data indicative of an image. Further, the CPU 110 may trim an object to cut out an image from the object. Alternatively, the size of an object can be changed into a golden rectangle.

3-11. Modification 11

At least one of the size and position of an object area may be determined in advance.

3-12. Other Modifications

In the embodiments and modifications described above, the data, information, parameters, and the like stored in the HDD 150 may be stored in a device other than the HDD 150. For example, attribute information may be stored in a device other than the document editing device 100. In this case, the document editing device 100 obtains attribute information from the other device by communication through a network or direct connection. Also in this case, the document editing device 100 need not store attribute information in advance. Otherwise, data, information, parameters, and the like can be input by a user.

Also in the embodiments and modifications described above, "predetermined" data, information, parameters, and the like can be determined in accordance with an instruction from a user. Alternatively, such data, information, parameters, and the like may be determined by the CPU 110 in accordance with a predetermined algorithm.

Also in the embodiments and modifications described above, the document editing program is stored in the HDD 150. However, the document editing program can be provided by a storage medium readable from computers, such as a CD-ROM (Compact Disk Read Only Memory).

**Claims**

1. A document editing device comprising:

   object obtaining means for obtaining an object including data indicative of a text;
   aspect ratio storage means for storing an aspect ratio within a predetermined range including a golden ratio; and
   object editing means for editting the object by changing at least a location of the text so that a circumscribed rectangle of the text is a rectangle having two adjacent edges whose lengths form a ratio which complies with the aspect ratio stored in the aspect ratio storage means.

2. The document editing device according to claim 1, wherein the aspect ratio $r$ is within a range of

$$\sqrt{2} \le r \le 2 \text{ or } \frac{1}{2} \le r \le \frac{1}{\sqrt{2}}.$$

3. The document editing device according to claim 2, wherein the aspect ratio falls within a range defined by an equation:

$$(0.9 \times \frac{1+\sqrt{5}}{2}) \le r \le (1.1 \times \frac{1+\sqrt{5}}{2})$$

or

$$(0.9 \times \frac{2}{1+\sqrt{5}}) \le r \le (1.1 \times \frac{2}{1+\sqrt{5}}).$$

4. The document editing device according to claim 3, wherein the aspect ratio is expressed by:

$$r = \frac{1+\sqrt{5}}{2}$$

or

$$r = \frac{2}{1+\sqrt{5}}.$$

5. The document editing device according to claim 1, further comprising
   object attribute obtaining means for obtaining object attribute information related to the object obtained by the object obtaining means, from an attribute storage means storing object attribute information indicating a font size and a line pitch of each object, wherein
the rectangle has a size which is determined based on the number of characters constituting the text and based on the object attribute information obtained by the object attribute obtaining means.

**6.** The document editing device according to claim 1, further comprising
object area obtaining means for obtaining information indicative of an object area, which limits an area where the object obtained by the object obtaining means is to be located within a layout area corresponding to an output means of a document edited by the document editing device, wherein
the rectangle has a size which is determined so as to be contained in the object area obtained by the object area obtaining means.

**7.** The document editing device according to claim 5, further comprising a layout determination means for locating the rectangle within the object area.

**8.** The document editing device according to claim 7, further comprising:

attribute obtaining means for obtaining object attribute information related to the object obtained by the object obtaining means, from an attribute storage means which stores object attribute information indicating a font size and a line pitch of the text;
largest rectangle determination means for determining a largest rectangle within the object area, the largest rectangle having a major or minor edge whose length is equal to any of edges of the object area; and
determination means for determining whether or not the text indicated by the object and located in accordance with the object attribute information obtained by the attribute obtaining means is contained in the largest rectangle determined by the largest rectangle determination means, or whether or not a blank space in the largest rectangle is equal to or smaller than a threshold, wherein
if the determination means determines that the object is not contained in the largest rectangle or that the blank space in the largest rectangle is equal to or greater than the threshold, the object editing means changes the object attribute information.

**9.** The document editing device according to claim 1, wherein
the aspect ratio storage means is configured to store a plurality of aspect ratios,
the object includes attribute information indicative of an attribute of the object itself,
the document editing device further includes an aspect ratio selection means for selecting one aspect ratio from the plurality of aspect ratios stored in the aspect ratio storage means, based on the attribute included in the object, and
the object editing means is configured to edit the object by editing the location of the text so that a circumscribed rectangle of the text has two adjacent edges whose lengths form a ratio equal to the aspect ratio selected by the aspect ratio selection means.

**10.** The document editing device according to claim 1, wherein
the aspect ratio storage means is configured to store a plurality of aspect ratios,
a document as a target to be edited includes layout information indicative of location of the object included in the document,
the document editing device further includes an aspect ratio selection means for selecting one aspect ratio from the plurality of aspect ratios stored in the aspect ratio storage means, based on the layout information included in the document, and
the object editing means is configured to edit the object by editing location of the text so that a circumscribed rectangle of the text has two adjacent edges whose lengths form a ratio equal to the aspect ratio selected by the aspect ratio selection means.

**11.** The document editing device according to claim 1, wherein
the aspect ratio storage means is configured to store a plurality of aspect ratios,
a document as a target to be edited includes background information indicative of a background,
the document editing device further includes an aspect ratio selection means for selecting one aspect ratio from the plurality of aspect ratios stored in the aspect ratio storage means, based on the background information included in the document, and
the object editing means is configured to edit the object by editing the location of the text so that a circumscribed rectangle of the text has two adjacent edges whose lengths form a ratio equal to the aspect ratio selected by the aspect ratio selection means.

12. A program causing a computer device having aspect ratio storage means for storing an aspect ratio within a predetermined range including a golden ratio to execute a process, the process comprising:

   obtaining an object including data indicative of a text; and
   editing an object by changing at least a location of the text so that a circumscribed rectangle of the text is a rectangle having two adjacent edges whose lengths form a ratio which complies with the aspect ratio stored in the aspect ratio storage means.

13. A computer readable storage medium storing a program causing a computer device having aspect ratio storage means for storing an aspect ratio within a predetermined range including a golden ratio to execute a process, the process comprising:

   obtaining an object including data indicative of a text; and
   editing an object by changing at least a location of the text so that a circumscribed rectangle of the text is a rectangle having two adjacent edges whose lengths form a ratio which complies with the aspect ratio stored in the aspect ratio storage means.

## *FIG. 1*

OBJECT OBTAINING UNIT ⌐101

OBJECT ATTRIBUTE INFORMATION OBTAINING UNIT ⌐102

OBJECT ATTRIBUTE STORAGE UNIT ⌐106

OBJECT EDITING UNIT ⌐104

ASPECT RATIO STORAGE UNIT ⌐107

LAYOUT UNIT ⌐105

100

## *FIG. 2*

100

CPU ⌐110

ROM ⌐120

RAM 130

190

I/F 140

NETWORK IF 180

HDD 150

KEYBOARD/ MOUSE 160

DISPLAY 170

*FIG. 3*

```
          START
            │
S100  ┌─────────────┐
      │ OBTAIN AN OBJECT │
      └─────────────┘
            │
S110  ┌──────────────────┐
      │  OBTAIN OBJECT   │
      │ ATTRIBUTE INFORMATION │
      └──────────────────┘
            │
            │        ┌──────────────────┐
            └───────▶│ GENERATE A GOLDEN │ S120
                     │    RECTANGLE     │
                     └──────────────────┘
                            │
                     ┌──────────────────┐ S130
                     │     LAYOUT       │
                     └──────────────────┘
                            │
                          END
```

*FIG. 4*

| TEXT ATTRIBUTE | SETTING VALUE |
|---|---|
| LINE PITCH | 1.5 LINES |
| FONT SIZE | 24 POINTS |
| FONT TYPE | GOTHIC |
| STYLE | Bold |

*FIG. 5*

```
            START
              │
S121  ┌────────────────┐
      │ TEMPORARY LAYOUT │
      └────────────────┘
              │
S122  ┌────────────────┐
      │ MEASURE LENGTHS OF │
      │    TWO EDGES    │
      └────────────────┘
              │
S123  ┌────────────────┐
      │ DETERMINE ONE EDGE OF │
      │  A GOLDEN RECTANGLE │
      └────────────────┘
              │
              │    ┌─────────────────────┐
              └───▶│ DETERMINE ANOTHER ONE │ S124
                   │ EDGE OF THE GOLDEN   │
                   │     RECTANGLE       │
                   └─────────────────────┘
                            │
                   ┌─────────────────────┐ S125
                   │   EDIT THE OBJECT   │
                   └─────────────────────┘
                            │
                          END
```

## FIG. 6

A NEXT GENERATION PRINTER XXX WILL BE ON SALE ON YY/ZZ (MONTH/DATE). THIS PRINTER ENABLES HIGH-SPEED PRINTING AND SUPPORTS 2-WAY SHEET FEED AND DOUBLE-SIDE PRINTING AS STANDARD EQUIPMENT, AND SIMULTANEOUSLY ACHIEVES SPACE AND ENERGY SAVING, THAT IS, AN EPOCH-MAKING PRODUCT.

## FIG. 7

A NEXT GENERATION PRINTER XXX WILL BE ON SALE ON YY/ZZ (MONTH/DATE). THIS PRINTER ENABLES HIGH-SPEED PRINTING AND SUPPORTS 2-WAY SHEET FEED AND DOUBLE-SIDE PRINTING AS STANDARD EQUIPMENT, AND SIMULTANEOUSLY ACHIEVES SPACE AND ENERGY SAVING, THAT IS, AN EPOCH-MAKING PRODUCT.

## FIG. 8

A NEXT GENERATION PRINTER XXX WILL BE ON SALE ON YY/ZZ (MONTH/DATE). THIS PRINTER ENABLES HIGH-SPEED PRINTING AND SUPPORTS 2-WAY SHEET FEED AND DOUBLE-SIDE PRINTING AS STANDARD EQUIPMENT, AND SIMULTANEOUSLY ACHIEVES SPACE AND ENERGY SAVING, THAT IS, AN EPOCH-MAKING PRODUCT.

## FIG. 9

D

L

A NEXT GENERATION PRINTER XXX WILL BE ON SALE ON YY/ZZ (MONTH/DATE). THIS PRINTER ENABLES HIGH-SPEED PRINTING AND SUPPORTS 2-WAY SHEET FEED AND DOUBLE-SIDE PRINTING AS STANDARD EQUIPMENT, AND SIMULTANEOUSLY ACHIEVES SPACE AND ENERGY SAVING, THAT IS, AN EPOCH-MAKING PRODUCT.

## FIG. 10

```
┌─────────────────────────────────────────────────────────────────────┐
│                                                                   200 │
│   ┌──────────────────────────────┐  101                              │
│   │   OBJECT OBTAINING UNIT       │                                   │
│   └──────────────────────────────┘                                   │
│                  │                                                    │
│                  ▼                          106                       │
│   ┌──────────────────────────────┐ 102  ┌──────────────────────┐     │
│   │      OBJECT ATTRIBUTE         │◄─────│   OBJECT ATTRIBUTE    │     │
│   │ INFORMATION OBTAINING UNIT    │      │    STORAGE UNIT       │     │
│   └──────────────────────────────┘      └──────────────────────┘     │
│                  │                                                    │
│                  ▼                                                    │
│   ┌──────────────────────────────┐ 201                               │
│   │   OBJECT AREA OBTAINING       │                                   │
│   │           UNIT                │                                   │
│   └──────────────────────────────┘                                   │
│                  │                                                    │
│                  ▼                                                    │
│   ┌──────────────────────────────┐ 104                               │
│   │     OBJECT EDITING UNIT       │                                   │
│   └──────────────────────────────┘                                   │
│                  │                                                    │
│                  ▼                                                    │
│   ┌──────────────────────────────┐ 105                               │
│   │        LAYOUT UNIT            │                                   │
│   └──────────────────────────────┘                                   │
│                                                                       │
└───────────────────────────────────────────────────────────────────────┘
```

## FIG. 11

```
        ┌──────────────┐
        │    START     │
        └──────────────┘
               │
               ▼
 S100  ┌──────────────────────┐
       │   OBTAIN AN OBJECT    │
       └──────────────────────┘
               │
               ▼
 S110  ┌──────────────────────┐
       │   OBTAIN OBJECT       │
       │ ATTRIBUTE INFORMATION │
       └──────────────────────┘
               │
               ▼
 S210  ┌──────────────────────┐
       │   OBTAIN AN OBJECT    │
       │        AREA           │
       └──────────────────────┘
               │
               └──────────────────────┐
                                      ▼
                         ┌──────────────────────┐
                         │ GENERATE A GOLDEN     │  S220
                         │    RECTANGLE          │
                         └──────────────────────┘
                                      │
                                      ▼
                         ┌──────────────────────┐  S130
                         │       LAYOUT          │
                         └──────────────────────┘
                                      │
                                      ▼
                         ┌──────────────────────┐
                         │        END            │
                         └──────────────────────┘
```

## FIG. 12

| TEXT ATTRIBUTE | SETTING VALUE | RANGE | STEP | PRIORITY |
|----------------|---------------|-------|------|----------|
| LINE PITCH | 1.5 LINES | $\geqq 1.0$ | 0.05 | 2 |
| FONT SIZE | 24 POINTS | $\geqq 20, \leqq 30$ | 2 | 1 |
| FONT TYPE | GOTHIC | | | $-1$ |
| STYLE | Bold | | | $-1$ |

## FIG. 13

## FIG. 14

```
                        ┌──────────────────────┐
                        │        START         │
                        └──────────┬───────────┘
                                   │
                                   ▼
S221          ┌──────────────────────────────────┐
              │  EXTRACT A LARGEST GOLDEN         │
              │         RECTANGLE                 │
              └──────────────┬───────────────────┘
                             │
                             ▼
S222          ┌──────────────────────────────────┐
              │        TEMPORARY LAYOUT           │
              └──────────────┬───────────────────┘
                             │
                             ▼
S223      ╱───────────────────────────╲   NO
         ╱  THE OBJECT FITS IN THE      ╲──────────┐
         ╲   GOLDEN RECTANGLE?          ╱          │
          ╲───────────────────────────╱           │
                    │ S224              ┌──────────▼───────────┐
                    │                   │  CHANGE A CONTENT    │
                    │                   │      ATTRIBUTE       │
                    ▼                   └──────────┬───────────┘
              ┌──────────────┐  S225               │
              │     END      │        ┌────────────▼───────────┐
              └──────────────┘        │ RETRY TEMPORARY LAYOUT │
                                      └────────────────────────┘
```

## FIG. 15

A NEXT GENERATION PRINTER XXX WILL BE ON
SALE ON YY/ZZ (MONTH/DATE).  THIS PRINTER
ENABLES HIGH-SPEED PRINTING AND SUPPORTS
2-WAY SHEET FEED AND DOUBLE-SIDE PRINTING
AS STANDARD EQUIPMENT, AND SIMULTANEOUSLY

ACHIEVES SPACE AND ENERGY SAVING, THAT

IS, AN EPOCH-MAKING PRODUCT.

## FIG. 16

A NEXT GENERATION PRINTER XXX WILL BE
ON SALE ON YY/ZZ (MONTH/DATE). THIS
PRINTER ENABLES HIGH-SPEED PRINTING
AND SUPPORTS 2-WAY SHEET FEED AND
DOUBLE-SIDE PRINTING AS STANDARD
EQUIPMENT, AND SIMULTANEOUSLY ACHIEVES
SPACE AND ENERGY SAVING, THAT IS,
AN EPOCH-MAKING PRODUCT.

## FIG. 17

A NEXT GENERATION PRINTER XXX
WILL BE ON SALE ON YY/ZZ (MONTH/
DATE). THIS PRINTER ENABLES
HIGH-SPEED PRINTING AND SUPPORTS
2-WAY SHEET FEED AND DOUBLE-SIDE
PRINTING AS STANDARD EQUIPMENT,
AND SIMULTANEOUSLY ACHIEVES SPACE
AND ENERGY SAVING, THAT IS, AN
EPOCH-MAKING PRODUCT.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002297571 A
- JP 8180037 A
- JP 10028962 A
- JP 10301980 A
- JP 2000200354 A
- JP 4347779 A

**Non-patent literature cited in the description**

- Mathematics seminar. NIPPON HYORONSHA CO., LTD, July 2004, vol. 42, 32